# EUROPEAN PATENT APPLICATION

(11) **EP 0 778 186 A1**
(43) Date of publication of application: **11.06.1997**
(21) Application number: 96203198.5
(22) Date of filing: 15.11.1996
(51) Int. Cl.: B60S 9/08

(54) **Supporting device, adjustable in height, especially for trailers**

(30) Priority: 05.12.1995 BE 9500996
(71) Applicant: ATLAS COPCO AIRPOWER N.V., 2610 Wilrijk (BE)
(72) Inventor: Segers, Karel Frans Clothilde M., 9140 Temse (BE)
(74) Representative: Donné, Eddy

(57) **Abstract**

A supporting device, which is adjustable in height, consists of a supporting leg (5) which can be screwed up and down in a guide (4) by means of a thread (3). The thread (3) is made in the shape of one or several indentations (10) or protuberances. The device is particularly suited for supporting a trailer.

## Description

The present invention concerns a supporting device.

In the first place, it concerns supporting device for trailers, but in general these supporting devices can also be used for other purposes.

It is known that movable devices can be equipped with supporting devices in the shape of supporting legs which can be moved up and down, such that these supporting legs can be put in a raised position when the above-mentioned devices are displaced, so that they do not hinder the displacement, and such that they can be lowered when the device concerned is erected in a fixed manner, so that the device is fixed in relation to the ground.

Such supporting devices are used among others for trailers with a single shaft in order to prevent them from tilting forward or backward after having been detached from the vehicle.

Such supporting devices are especially necessary for trailers upon which is mounted a machine, such as a compressor or such, as it is usually required that this machine is kept in a horizontal position during use.

As is known, use can be made for the above-mentioned supporting devices of a supporting leg which can be shifted and clamped in a guide. These known embodiments are disadvantageous, however, in that the clamped supporting leg can easily come off as a result of vibrations.

According to another known embodiment, use is made of a supporting leg which can be screwed up and down in a guide, whereby this supporting leg consists of a threaded rod which is provided with a conventional, for example metrically cut thread. Supporting legs with such a thread are disadvantageous, however, in that the pitch is always very small and in that screwing such supporting legs in and out is very time-consuming. These embodiments are also disadvantageous in that the thread is relatively fine and thus can be easily damaged.

The invention concerns a supporting device of the latter type, i.e. a supporting device which consists of a supporting leg which can be screwed up and down in a guide by means of a thread, excluding one or several of the above-mentioned disadvantages.

To this end, the invention concerns a supporting device, consisting of a supporting leg which can be screwed up and down in a guide by means of a thread, characterized in that the above-mentioned thread is made in the shape of one or several indentations or protuberances.

As the thread is formed of indentations or protuberances, it is less sensitive to damages.

According to a preferred embodiment, this type of thread also makes it possible to make the supporting leg out of a pipe. From a constructional viewpoint, the indentations or protuberances can be easily provided in this case by locally transforming the pipe wall, in particular by bending it, for example by means of rolling. Other advantageous production techniques are deformation by means of hydrostatic pressure with oil or water, casting or moulding by making use of special moulding dies.

The use of a house further offers the advantage that the supporting leg does not need to be extra heavy in case it has a relatively large diameter, as is the case with a rod.

Preferably, the guide and the supporting leg are provided with single-thread with a pitch which is larger than the thread width. This offers the advantage that a limited number of rotations of the supporting leg results in a large displacement in height, so that the supporting leg can be screwed in and out very quickly. However, the use of a multiple-thread is not excluded.

In case the thread is formed of a protuberance, use can be made according to the invention of a mainly continuous helicoidal protuberance as well as of locally provided protuberances which are provided at regular distances from one another along a helicoidal line on the supporting leg.

For the guide, use is preferably made of a cylindrical bush, designed to be provided fixed to the device to be supported, which is provided with internal thread, either in the shape of a mainly continuous helicoidal protuberance, or in the shape of several protuberances which are provided at regular distances from one another along a helicoidal line, or in the shape of a helicoidal indentation.

In order to better explain the characteristics of the invention, the following preferred embodiments are described as an example only without being limitative in any way, with reference to the accompanying drawings, where:
figure 1 represents a trailer which is equipped with a supporting device according to the invention, when it is attached to a vehicle;
figure 2 represents the trailer when it is detached and being supported by the supporting device;
figure 3 shows a view to a larger scale and partly as a section of the part which is indicated in figure 2 with F3;
figure 4 shows a view according to arrow F4 in figure 3;
figure 5 shows a view to a larger scale of the part which is indicated in figure 3 with F5;
figure 6 shows the guide which is indicated with arrow F6 in figure 3, without the supporting leg;
figure 7 shows a view according to arrow F7 in figure 6;
figure 8 shows a variant of the part which is indicated in figure 6;
figure 9 shows a section according to line IX-IX in figure 8;
figure 10 shows a variant of the supporting device;
figure 11 shows another variant, in particular of the part which is indicated with F11 in figure 10.

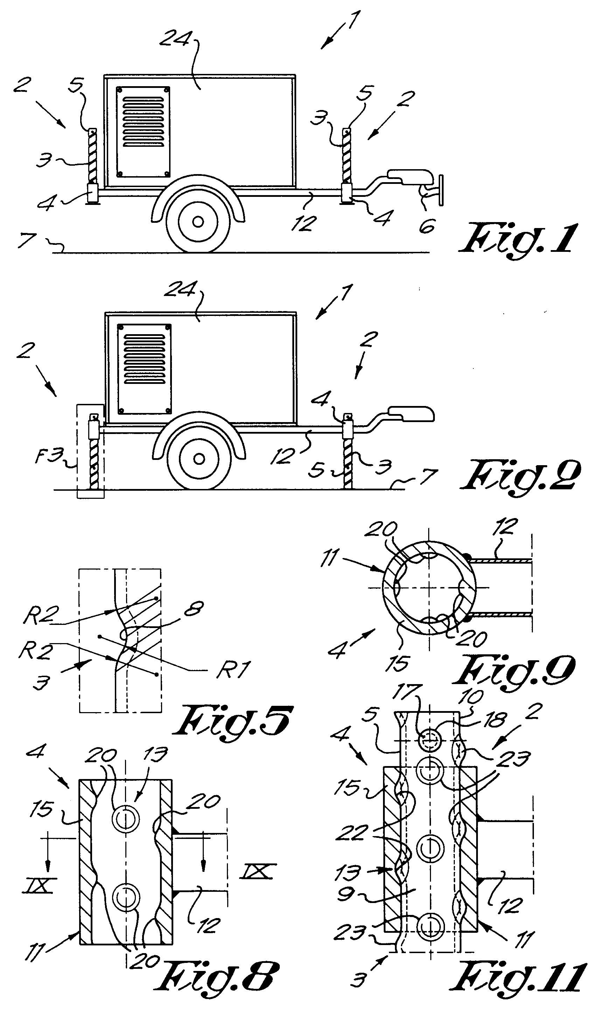

Figure 1 shows a trailer 1 which is equipped with supporting devices 2 according to the invention, whereby these supporting devices 2 are of the type which consists of a supporting leg 5 which can be screwed up and down in a guide 4 by means of a thread 3.

As is represented in figure 1, these supporting legs 5 can be put in a raised position by screwing them in, when the trailer 1 is attached to the towing hook 6 or such of a vehicle, such that these supporting legs 5 form no hindrance during the displacement.

When the trailer 1 is detached, it can be supported by screwing out the supporting legs 5 until they reach the underlying ground 7.

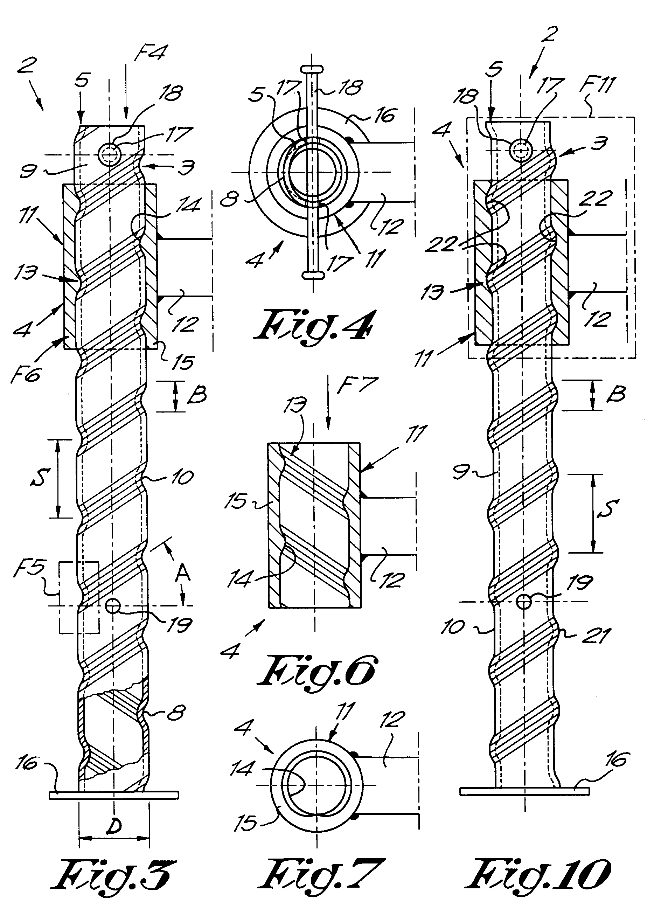

The invention is special in that, as is represented in figures 3 and 4, the thread 3 of each supporting leg 5 concerned consists of an indentation or a protuberance, in this case an indentation 8.

As is represented, the supporting leg 5, in particular the part in which the thread 3 is formed, hereby preferably consists of a pipe 9.

In profile, the thread 3 is rounded off. Use is hereby preferably made of roundings with radiuses R1 and R2, as is indicated in figure 5, which are larger than 5 mm. In particular, the radiuses R1 and R2 preferably measure 10 and 14 mm respectively.

The thread 3 preferably consists of a deformation, in particular a bending of the wall 10 of the pipe 9. This deformation can be realized among others according to one of the techniques described in the introduction.

The guide 4, which is represented as such in figures 6 and 7, consists of a cylindrical bush 11 which is attached for example to the frame 12 of the trailer 1 or such, and which is provided with an internal thread 13 which cooperates with the thread 3 of the supporting leg 5 concerned.

In the example shown, the internal thread 13 is made in the shape of a mainly helicoidal protuberance 14 which in this case consists of a local thickening of the wall 15 of the bush 11.

The thread 3, 13 respectively, is made such that it is self-locking. To this end, this thread 3-13 preferably shows a slope A of 20 to 25°, in particular 22°, related to the average diameter of the indentation, protuberance respectively.

The diameter D of the pipe 9, without taking into account the deformation, preferably is at least 45 mm, in particular 48 mm.

The pitch S is of course as a function of the diameter and the slope angle A. In a practical embodiment, the pitch S is at least 50 mm, and it will preferably be about 55 mm.

The thread width B is considerably smaller than the pitch S, but it is preferably at least 20 mm, and preferably 25 mm.

The depth of the indentation 8, the height of the protuberance 14 respectively, is preferably about 8 mm.

At the bottom of the supporting leg 5 can be provided a supporting plate 16 which is for example welded to the pipe 9.

At the top end of the supporting leg 5 is preferably provided a means to easily turn the supporting leg 5. Openings 17 are provided to this end in the top end through which goes a bar 18 forming a handle for turning the supporting leg 5.

At a lower level can be provided openings 19 which make it possible to provide a locking pin through the supporting legs 5, for example in the position as represented in figure 1, naturally above the guides 4, so that the supporting legs 5 are prevented from moving down.

Figures 8 and 9 show a variant of the bush 11, whereby the thread 13 is formed of local protuberances 20 on the inside of the wall 15 which are provided at regular distances from one another along a helicoidal line.

According to the variant of figure 10, use is made of thread 3 which is formed by a helicoidal protuberance 21, for example by providing a helicoidal indentation along the inside of the pipe 9.

It is clear that the thread 13 of the bush 11 in this case consists of a helicoidal indentation 22, on the spot of the protuberance 14 of figure 3.

Figure 11 shows a variant whereby the continuous helicoidal protuberance 21 of figure 10 has been replaced by local protuberances 23 which are provided at regular distances from one another along a helicoidal line in the wall 10 of the pipe 9. Of course, the thread 13 hereby consists of a continuous helicoidal indentation 22, analogous to figure 10.

The above-mentioned dimensions in relation to the embodiment of figures 3 to 7 can analogously be used for the embodiments of figures 8 to 11.

Although the thread 3 preferably consists of a deformation in the wall 10 of the pipe 9, while maintaining the same wall thickness, it is not excluded to form this thread 3 by making the pipe wall locally thicker or thinner.

The above-mentioned bush 11 preferably has a smooth outer wall. However, this does not exclude that this bush can also be made from a pipe part whereby the thread 13 consists of a deformation in the pipe wall which is visible on the outside thereof.

The use and operation of the supporting device 2 can be easily derived from figures 1 and 2.

The invention is particularly suitable for trailers 1 with a single shaft upon which, as represented in figures 1 and 2, is mounted a compressor unit 24. Since such compressor units 24 often have to be displaced on a construction site, the advantage of the supporting legs 5 being easy to screw in and out can be fully used. The use of a pipe 9, which makes it possible to provide a supporting leg 5 with a relatively large diameter, is also advantageous in that the thread 3 has a relatively large length of circumference, so that there is contact with the guide 4 over a relatively large surface, which promotes the self-locking action.

Of course, there may be a slight play between the supporting leg 5 and the guide 4, which makes it easy for the supporting leg 5 to turn.

Finally, it should be noted that the threads 3 and 13 as represented in the figures in the side views are only represented schematically by a linear course at an angle, for clarity's sake. In reality, the threads, which are helicoidally tapered, show a curved course as seen from aside.

The present invention is by no means restricted to the embodiments described as an example and represented in the accompanying drawings; on the contrary, such a supporting device can be made in any shapes and dimensions while still remaining within the scope of the invention.

## Claims

1. Supporting device, consisting of a supporting leg (5) which can be screwed up and down in a guide (4) by means of a thread (3), characterized in that the thread (3) is made in the shape of one or several indentations (10) or protuberances (21, 23).

2. Supporting device according to claim 1, characterized in that the supporting leg (5), in particular the part to which the thread (3) is provided, consists of a pipe (9).

3. Supporting device according to claim 2, characterized in that the thread (3) of the supporting leg (5) consists of a deformation in the wall (10) of the pipe (9).

4. Supporting device according to any of the preceding claims, characterized in that the guide (4) and the supporting leg (5) are provided with single-thread (3-13) with a pitch (S) which is larger than the thread width (B).

5. Supporting device according to any of the preceding claims, characterized in that the thread (3) of the supporting leg (5) is rounded off in profile, with roundings (R1-R2) which are larger than 5 mm.

6. Supporting device according to any of the preceding claims, characterized in that the thread (3) of the supporting leg (5) is made in one of the following manners:
- in the shape of a mainly continuous helicoidal indentation (10);
- in the shape of a mainly continuous helicoidal protuberance (21);
- in the shape of local protuberances (23) which are provided at regular distances from one another along a helicoidal line.

7. Supporting device according to any of the preceding claims, characterized in that the guide (4) consists of a cylindrical bush (11) with internal thread (13) which is made in one of the following manners:
- in the shape of a mainly continuous helicoidal protuberance (14);
- in the shape of a mainly continuous helicoidal indentation (22);
- in the shape of local protuberances (20) which are provided at regular distances from one another along a helicoidal line on the inside of the bush (11).

8. Supporting device according to any of the preceding claims, characterized in that the thread (3-13) is self-locking.

9. Supporting device according to any of the preceding claims, characterized in that the thread (3-13) shows a slope (A) of 20 to 25°, related to the average diameter.

10. Supporting device according to any of the preceding claims, characterized in that the part of the supporting leg (5) to which the thread (3) is provided shows a diameter (D) which is at least 45 mm.

11. Supporting device according to any of the preceding claims, characterized in that a supporting plate (16) is provided on the bottom side of the supporting leg (5).

12. Supporting device according to any of the preceding claims, characterized in that an opening (17) is provided in the top end of the supporting leg (5) through which goes a bar (18) which makes it possible to turn the supporting leg (5).

13. Supporting device according to any of the preceding claims, characterized in that the supporting leg (5) is provided with an opening (19) at a distance from its bottom end which makes it possible to lock the supporting leg (5) in raised position by providing a securing element above the guide (4).

14. Supporting device according to any of the preceding claims, characterized in that it is part of a trailer (1) upon which is mounted a compressor unit (24).
